# EUROPEAN PATENT SPECIFICATION

(11) **EP 3 654 808 B1**
(45) Date of publication and mention of the grant of the patent: **25.08.2021**
(21) Application number: 18742998.0
(22) Date of filing: 16.07.2018
(51) Int. Cl.: A47J 31/40, A47F 1/035, G01F 11/18

(54) **DEVICE FOR METERING AND DISPENSING BULK MATERIAL**
VORRICHTUNG ZUR MESSUNG UND AUSGABE VON SCHÜTTGUT
DISPOSITIF DE MESURE ET DISTRIBUTION DE MATÉRIAU EN VRAC

(30) Priority: 18.07.2017 EP 17181898
(43) Date of publication of application: 27.05.2020
(73) Proprietor: Société des Produits Nestlé S.A., 1800 Vevey (CH)
(72) Inventor: BUTSCHER, Silvio, 2054 Chezard-St-Martin (CH)
(74) Representative: Ducreux, Marie
(86) International application number: PCT/EP2018/069287
(87) International publication number: WO 2019/016149

(56) References cited:
- WO-A1-88/04769
- US-A- 4 085 870
- US-A- 5 685 461
- US-A1- 2004 173 643
- US-A1- 2007 210 119
- US-B1- 6 450 371

## Description

### Field of the invention

The present invention relates to beverage dispensers preparing beverages from a beverage powder and wherein a dose of powder is metered and dispensed to prepare the beverage.

### Background of the invention

Many beverages like espresso and other coffee beverages, milk beverages, chocolate beverages are prepared by mixing a beverage ingredient powder with a liquid, usually water. Generally the beverage ingredient powder is stored in a tank and the tank cooperates with a dosing device to supply a specific dose of powder from the tank for a further beverage preparation.

A type of dosing device consists in a dosing drawer comprising a metered cavity. Further to a back and forth sliding movement of the drawer, the cavity is successively filled with powder and emptied. FR 2 702 452 and US 5,685,461 illustrate this type of dosing device.

This type of device can present problems because, between two beverage preparations, the next dose of powder is usually introduced in the metered cavity and stored within. Since beverage powders, in particular instant coffee powder or roast and ground powder, react with air and humidity, it is important that this dose remains isolated from atmosphere. Yet, it has been observed that this isolation is not very efficient. This is often due to the nature of the drawer itself. The drawer shall be easily slid inside its housing - in particular manually - and, accordingly, it is preferable that the drawer does not fit too tight in the housing when it is in the metering position. Moreover, it is difficult to manufacture at high scale pieces of plastic that can perfectly fit one in the other, in particular when the pieces are produced by injection moulding. As a result, the tightness is not so efficient and the beverage powder that is pre-dosed in the metered cavity can become oxidized and/or humidified. Oxidation leads to a poor quality of the next prepared beverage and humidification leads to a blocking of the drawer, requiring dismantling and cleaning.

US 4,557,404 has proposed to improve these dosing devices. The solution consists in a new way of manufacturing the dosing device so that the operator is able to easily dismantle and clean it. Specifically, the housing is made of two dismountable pieces, a body and a track unit, assembled through channels and flanges. This solution is not satisfying because it does not solve the root problem of improving the tightness of the drawer within the housing and, accordingly, avoiding too frequent dismantling and cleaning operations. In addition, each piece the device is made of presents a rather complicated design that is not easily produced at a manufacturing size.

Consequently, there is a need for improving these dosing devices.

An object of the present invention is to provide a dosing device comprising a dosing drawer with a metered cavity sliding in a housing which provides an improved tightness between the drawer and the housing without impacting the sliding movement of the drawer in the housing.

It would be advantageous to provide a dosing device that can be temporarily removed from the beverage dispenser without the risk that the drawer slides out of the housing on its own by gravity and that, as a result, powder falls out of the dosing device during the handling.

It would be advantageous to provide a dosing device that can be produced at high scale, in particular by injection moulding, without impacting the quality of the produced dosing devices.

### Summary of the invention

In a first aspect of the invention, there is provided a device for storing, metering and dispensing bulk material, said device comprising :
- a container for storing the bulk material, and
- a dosing unit for metering and dispensing a metered dose of bulk material from the container,
the bottom of the container cooperating with the dosing unit in order to supply bulk material to the dosing unit, and
the dosing unit comprising :
- a housing comprising a bottom wall, a top wall, two lateral walls, a front end and a rear end, the top wall comprising a port cooperating with the bottom of the container,
- a drawer able to slide longitudinally in and out of said housing through the front end of the housing between a metering position and a dispensing position respectively, said drawer comprising :
   ▪ a bottom wall and a top wall, and
   ▪ a metering cavity extending from the top wall to the bottom wall and designed to receive bulk material from the port of the housing when the drawer is in the metering position and to discharge the metered quantity of bulk material when the drawer is in the dispensing position,
wherein the lateral walls of the housing are constricted vertically by construction and said lateral walls of the housing are able to expand vertically in response to the longitudinal sliding movement of the drawer inside the housing, and
wherein the external height of the drawer is larger than the internal height of the housing when the housing is in a non-expanded state, and
wherein the constriction of the lateral walls of the housing is adapted to bring the drawer into clamping engagement with the top and bottom walls of the housing when the drawer is positioned in the housing.

The container of the device is configured for storing bulk material like a powder, free flowing particles, pellets, granulates, granules or grains. Preferably, the bulk material is a beverage ingredient like :
- powders of instant coffee, milk, cacao or instant tea, or
- pellets of such powders, or
- coffee beans, or
- roast and ground coffee powder or pellets of such a powder.

The container stores multiple doses of bulk material and its bottom cooperates with the top wall of the housing of the dosing unit for metering and dispensing a metered dose of bulk material from the container. Bulk material flows by gravity from the container to the port in the top wall of the dosing unit.

The bottom of the container cooperates with the dosing unit in order to supply bulk material to the dosing unit by gravity. Preferably, at least a part of the container is removably attached to the dosing unit. Accordingly, the container can be detached from the dosing unit temporarily in order to refill or clean the container or for maintenance operations.

The dosing unit comprises a housing and a drawer. The drawer is able to slide longitudinally in and out of the housing through the front end of the housing between a metering position and a dispensing position respectively.

The housing of the dosing unit comprises a bottom wall, a top wall, two lateral walls, a front end and a rear end.

The bottom wall of the housing is flat and solid so that said bottom wall closes the lower opening of the metering cavity when the drawer slides in the housing.

Similarly, the top wall of the housing is flat and solid so that said top wall closes the upper opening of the metering cavity when the drawer slides in the housing, except at the port cooperating with the bottom of the container. As a result, bulk material is able to flow through this port from the container to the drawer.

The bottom and top walls of the housing are essentially parallel.

The front end of the housing is fully opened in order to enable the movement of the drawer in and out of the housing.

The rear end of the housing can be opened or at least partially closed by a wall. Preferably, it comprises a stopping member on which the drawer is able to abut at the end of its movement in the housing.

The drawer of the dosing unit comprises a bottom wall, a top wall and a metering cavity. This metering cavity extends vertically from the top wall to the bottom wall and is designed :
- to receive bulk material from the port of the housing when the drawer is in the metering position, and
- to discharge the metered quantity of bulk material present in the metering cavity when the drawer is in the dispensing position.

Usually, the bottom wall of the drawer is flat and solid except at the lower opening of the metering cavity.

Similarly, usually, the top wall of the drawer is flat and solid except at the upper opening of the metering cavity.

Preferably, the surfaces of the drawer are such that, in the metering position, the surface of the top wall of the drawer, respectively of the bottom wall of the drawer, extends along the whole surface of the top wall of the housing, respectively of the bottom wall of the housing. Consequently the tightness between the pair of surfaces of the top walls and the tightness between the pair of surfaces of the bottom walls are improved.

The bottom and top walls of the drawer are essentially parallel.

Preferably, the drawer of the dosing unit comprises a front wall and a rear wall.

In the dosing unit, the two lateral walls of the housing are constricted vertically by construction and said lateral walls of the housing are able to expand vertically in response to the longitudinal sliding movement of the drawer inside the housing.

In addition, in the dosing unit, the external height of the drawer is slightly larger than the internal height of the housing when the housing is considered in its non-expanded state. The external height of the drawer corresponds to the distance between the upper surface of the top wall of the drawer and the lower surface of the bottom wall of the drawer. The internal height of the housing corresponds to the distance between the lower surface of the top wall of the housing and the upper surface of the bottom wall of the housing.

Since the external height of the drawer is larger than the internal height of the housing when the housing is considered in its non-expanded state, the fact of sliding the drawer in the housing expands the lateral walls of the housing.

The lateral walls of the housing are constricted by construction meaning that the housing alone is constricted in absence of any external force applied to the housing. More precisely, it is the lateral walls of the housing that are constricted vertically.

The strength of the constriction induced by the lateral walls is designed such that the lateral walls of the housing are able to expand vertically in response to the insertion of the drawer inside the housing. Accordingly, when the drawer is inserted in the housing, it stretches vertically the lateral walls of the housing.

In addition, the constriction of the lateral walls of the housing is adapted to bring the drawer into clamping engagement with the top and bottom walls of the housing when the drawer is positioned inside the housing. Due to this clamping, the bottom wall of the drawer, respectively the top wall of the drawer, tightly fits and slides along the bottom wall of the housing, respectively along the top wall of the housing, improving the tightness between the two elements. Due to this tightness, when the dosing unit is not used and is positioned in the metering position, with bulk material present in the metering cavity, air and moisture can hardly reach said cavity and bulk material. Consequently, the properties of the bulk material are not affected and the quality of the beverage prepared therefrom is good.

Besides, in the case of bulk material in the form of powder, this clamping and tightness prevent powder particles to slide between the sliding surfaces of the housing and of the drawer which would create dirtiness and which would block the movement of the drawer.

In addition, this clamping presents the advantage of avoiding the drawer from easily sliding out of the drawer by gravity fall when the dosing unit is handhold by an operator during maintenance. Except if the drawer is actively pulled out of the housing manually, the drawer remains clamped in the housing. The clamping engagement fastens the drawer to the housing.

The dosing unit presents the advantage that, even if, due to the manufacturing of the housing and the drawer at high scale, the housing and the drawer do no perfectly fit one in the other, in particular if the parallelism of the bottom and top walls of the drawer and/or the parallelism of the bottom and top walls of the housing are not perfect, the constriction of the lateral walls of the housing can compensate these imperfections and still guarantees the tightness with the top and bottom walls of the housing.

The housing can slightly adapt its internal shape to the shape of the drawer when the latter slides inside.

The sliding movement of the drawer in and out the housing can be carried out manually or can be motorized.

Accordingly, the constriction of the lateral walls is preferably designed to guarantee an easy sliding movement of the drawer in the housing. The sliding shall remain soft in both directions, especially when the movement is made manually. The operator shall not force the drawer in the housing.

Generally the external height of the drawer is larger than the internal height of the housing by at least 0,02 mm, preferably at most 1 mm, even more preferably the difference is of about 0,1 mm.

Depending on the type of bulk material dosed by the dosing unit, the height of the drawer of a dosing unit can be of at least 3 mm (for example for dosing spices) and is usually comprised between 10 and 50 mm (for example for coffee powder). Consequently, the above mentioned difference of height (at least 0,02 mm, preferably at most 1 mm) is sufficient to provide a clamping effect and tightness.

The choice of the difference of height affects the strength needed for moving the drawer in and out of the housing. An important difference of heights between the two parts of the dosing unit leads to important friction forces between the top walls of the housing and the drawer and between the bottom walls of the housing and the drawer and as a result leads to a very strong clamping. These friction forces directly impact the feeling of the operator during the dosing operation or the strength to be applied by a motor during this operation.

It has been noticed that a difference of heights of about 0,1 mm simultaneously enables :
- an efficient clamping of the drawer in terms of tightness and holding back when the whole doser is manipulated, and
- a soft movement of the drawer in the housing during the dosing operation.

The difference of heights can depend on the nature of the material the housing is made of. The above preferences apply to a plastic material and similar materials.

Preferably, the housing is made of one single piece of material.

Preferably, the housing is made of plastic. This plastic can be a semi-crystalline polymer. The plastic can be selected in the list of linear polyethylene (PE), polyethylene terephthalate (PET), polytetrafluoroethylene (PTFE), isotactic polypropylene (PP), polyphenyl ethers (PPEs) or polyphenylene oxides (PPOs).

It is preferable that the plastic presents a low deformation rate and, in particular, a low moulding shrinkage. Accordingly, the tightness between the top and bottom walls of the drawer and the housing is even more guaranteed.

Usually, the housing in plastic is made by injection moulding. Accordingly, the housing can be produced at high scale and low costs.

Generally, the drawer is made of the same material as the housing. Usually, the drawer is in plastic and is made by injection moulding.

Usually, the design of the lateral walls of the housing provides constriction of the lateral walls of the housing.

The constriction of the lateral walls of the housing, and in particular the strength of the constriction, is obtained by the manner the lateral walls are constructed and designed.

According to one first embodiment, the lateral walls can be constructed so that each lateral wall of the housing comprises a mesh of cavities.

Preferably, the mesh of cavities comprises at least two lines of cavities aligned longitudinally along the lateral wall, and, for two side touching lines, the cavities of one line are out of line with the cavities of the other line.

This mesh of cavities enables the vertical expansion of the lateral walls when the drawer is slid inside the housing.

According to one mode of said first embodiment, the walls of the cavities can present the shape of waves extending longitudinally along the lateral wall and wherein two side touching waves join at their crusts and troughs.

According to another mode of said first embodiment relative to the construction of the lateral walls of the housing, each lateral wall can comprise a rod, said rod extending longitudinally along the lateral wall from the front end to the rear end of the housing, and said rod being attached to the lateral wall by upper and lower pillars, and said upper and lower pillars being alternatively positioned along the length of the rod.

In such an embodiment, the rod can slightly deforms under the force exerted through the pillars by the drawer sliding inside the housing. In particular, since the height of the drawer is slightly larger than the height of the housing, when the drawer slides within the housing, the drawer exerts a pulling force on the pillars and the rod bends out, such as a spring leaf, and increases the thickness of the housing.

The thickness of the rod can be adapted to control the constriction of the lateral walls. The finer is the road, the easier it is to expand the lateral walls and to move the drawer in the housing. The thicker is the rod, the harder it is to expand the lateral walls, the stronger is the clamping effect and the harder it is to move the drawer in the housing. Consequently, dimensioning the thickness of the rod enables the control of the clamping effect. A strong clamping effect provides an improved tightness but a harder feeling during sliding movement, whereas a weaker clamping provides a softer feeling but a weaker tightness.

The rod can be straight from the front end to the rear end of the housing.

Alternatively, the rod can be composed of successive portions of straight rod extending between two successive pillars, said portions of straight rods extending along different directions.

In particular, the portions of straight rod can form a wave shape extending from the front end to the rear end.

In a particular embodiment, the rod can be crenellated.

Preferably, both lateral sides of the housing present the same design so that both lateral walls are expandable similarly.

According to one third embodiment relative to the design of the lateral sides of the housing, each lateral wall of the housing can be designed at least regionally in a bellows-like configuration, the bellows being constructed so as to provide a vertical constriction of the lateral walls of the housing.

Consequently, the bellows can be deformed, in particular expanded, when the drawer slides inside the housing. The form of the housing follows and adapts to the form of the drawer, even if the drawer has not been perfectly manufactured, in particular even if the top and bottom walls are not perfectly parallel. The tightness between the housing and the drawer walls is reached.

Preferably, the cavity of the drawer is positioned in the drawer so that in the top wall, respectively in the bottom wall, the lateral edges of the cavity are distant from the lateral edges of the top wall, respectively of the bottom wall.

Preferably, the lateral edges of the cavity are distant from the lateral edges of said walls by at least 10 mm.

Preferably, the front, respectively the rear, edge of the cavity is distant from the front, respectively the rear, edge of the drawer by at least 10 mm too.

Accordingly the combination of the tightness between the drawer and the housing and this remote position of the cavity far from the outside atmosphere efficiently reinforces the effect of limiting the contact of metered bulk material in the cavity with atmosphere, that is with air and humidity.

Preferably, at its rear end only, the drawer presents an external height slightly smaller than the internal height of the housing when the housing is in a non-expanded state. As a result, when the drawer has been fully removed from the housing (for example for cleaning), the movement of re-introduction of the drawer in the housing is easy because the rear end with reduced height finds easily its way in the front end of the housing of larger height. Once the rear end of the drawer has been introduced, the movement of complete introduction of the housing easily follows though the height of the drawer is larger than the height of the housing due to the expandable walls of the housing.

The control of the height at the rear end of the drawer can be implemented by designing rounded edges at the rear end of the top and bottom walls. Alternatively, in the design of the drawer, the rear end of the top wall and/or the rear end of the bottom wall can be inclined in order to reduce the external height of the drawer at the rear end only.

Alternatively, when the housing is in a non-expanded state and at its front end only, the housing can present an internal height slightly larger than the external height of the drawer. As a result, when the drawer has been fully removed from the housing (for example for cleaning), the movement of re-introduction of the drawer in the housing is easy because the rear end with finds easily its way in the front end of the housing of larger height. Once the rear end of the drawer has been introduced, the movement of complete introduction of the housing easily follows though the height of the rest of the housing is smaller than the height of the drawer due to the expandable walls of the housing.

The control of the height at the front end of the housing can be implemented by designing rounded edges at the front end of the top and bottom walls. Alternatively, in the design of the housing, the front end of the top wall and/or the front end of the bottom wall can be inclined in order to increase the internal height of the housing at the front end only.

Preferably, the front end of the bottom wall of the housing comprises an edge designed for scrapping the edge of the lower side of the metering cavity when the drawer slides longitudinally in the housing from the dispensing to the metering position.

Accordingly any powder that may remain attached to the edge of the cavity is detached by the scrapping member and falls out of the dosing unit.

Generally, the edge of the lower side of the metering cavity is a sharp edge.

According to one embodiment, the container is removable from the device for storing, metering and dispensing bulk material and the dosing unit comprises a receiving area for connecting the container to the port of the top wall of the housing.

In one mode, the removable container can be a disposable container designed for refilling the device for storing, metering and dispensing bulk material, for example a disposable container such as described in WO 2009/000810. Then, the receiving area can be designed as the receiving assembly described in WO 2011/036063.

In one embodiment, the device can comprise a motor to slide the drawer of the dosing unit between the metering and the dispensing positions.

Depending on the design of the constriction of the housing, the force necessary for pulling and pushing the drawer out and in the housing can remain weak, and yet, an effective tightness can be guaranteed simultaneously. In particular, the force can remain soft for a manual handling and, if the drawer is actuated by a motor, a low power motor can be used for actuation of the drawer, saving costs for the manufacture of the automatized device and saving energy costs when the device is used.

According to a second aspect, there is provided a beverage preparation system comprising a device such as described above.

According to a particular embodiment, the system can comprise a beverage preparation chamber connected to at least one liquid supply. The device for storing, metering and dispensing beverage ingredient in bulk can cooperate with said beverage preparation chamber so that beverage ingredient is dispensed in the chamber.

Accordingly, a beverage can be prepared from bulk material and liquid in the beverage preparation chamber and then the beverage can be dispensed in a drinking container through an outlet of the chamber.

The beverage preparation chamber is preferably a chamber configured for enabling the dissolution of a soluble beverage ingredient with an aqueous liquid by contacting and mixing the ingredient with the liquid. The chamber can be the mixing chamber described in WO 2008/071613.

Alternatively, the beverage preparation chamber can be a brewing chamber configured to receive roast and ground coffee powder and water. In the brewing process, the heated water infuses and extracts coffee. The brewing chamber can contain a filter to allow beverage to drain from the infused food ingredient and water mixture It can be configured to be hermetically closed after powder dosing in order to receive and hold water under pressure.

In a third aspect, there is provided a method for producing a beverage in a beverage preparation system such as described above comprising the steps of:
- positioning the drawer in the metering position, then
- positioning the drawer in the dispensing position, and then
- introducing liquid in the beverage preparation chamber.

Preferably, the method comprises a further step wherein, after positioning the drawer in the dispensing position and before introducing liquid in the beverage preparation chamber, the drawer is positioned in the metering position again.

Accordingly, there is less risk that humidity rises from the chamber and reaches the metered cavity of the drawer.

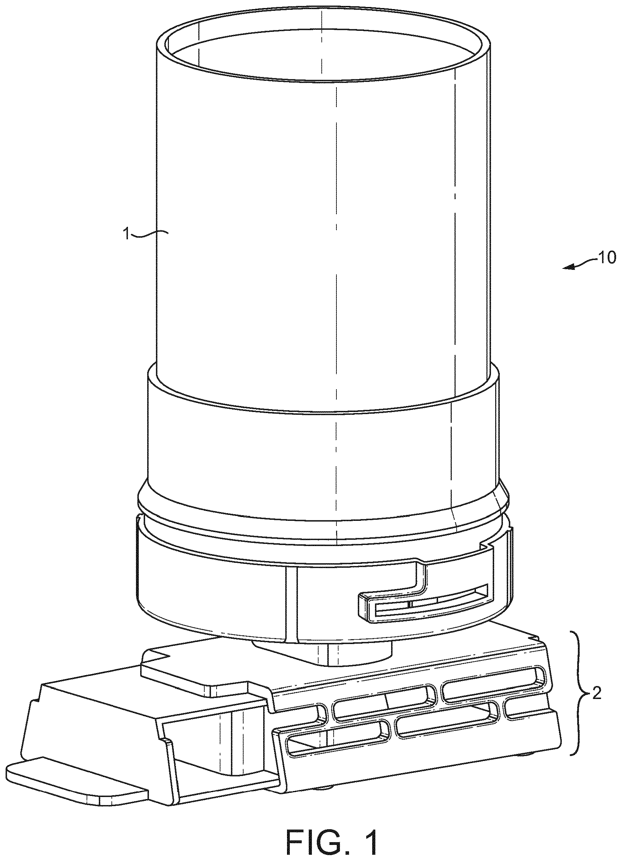

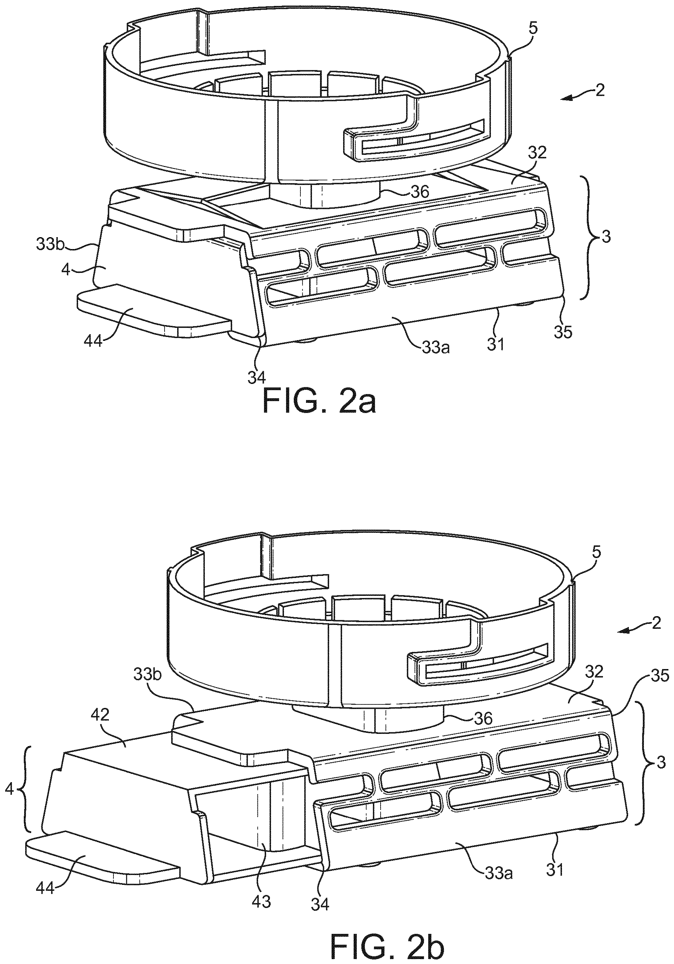

In the present application the terms "rear", "front", "top", "bottom", "lateral", "longitudinal", "vertical", "lower", "upper" are used to describe the relational positioning of features of the invention. These terms should be understood to refer to the device for storing, metering and dispensing bulk material in its normal orientation when positioned in a beverage preparation dispenser for the production of a beverage as shown in the figures 1, 2a and 2b.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

The characteristics and advantages of the invention will be better understood in relation to the following figures :
- Figure 1 is a perspective view of a device for storing, metering and dispensing bulk material according to the invention,
- Figures 2a and 2b are isolated perspective view of the dosing unit of the device of Figure 1 in metering position and dispensing position respectively,
- Figure 3 is a top view of Figure 2a,
- Figures 4a and 4b are bottom and top views respectively of Figure 2b,
- Figures 5a and 5b are perspective views of the housing of the dosing unit of Figure 2a from the front and the rear respectively,
- Figures 6a and 6b are perspective views of the housing of the drawer of Figure 2a from the top and the bottom respectively,
- Figures 7a to 7e illustrate alternative housings of the dosing unit,
- Figure 8 illustrates beverage preparation system comprising a device according to Figure 1.

### Detailed description of the drawings

**Figure 1** illustrates a device 10 for storing, metering and dispensing bulk material. The device comprises a container 1 for storing said bulk material and a dosing unit 2. The bottom of this container cooperates with the dosing unit 2 in order to supply bulk material.

**Figure 2a** is an isolated view of the dosing unit 2 of the device 10 of Figure 1. The dosing unit comprises a housing 3. This housing comprises a bottom wall 31, a top wall 32, two lateral walls 33a, 33b, a front end 34 and a rear end 35.

The top wall 32 comprises a port 36 cooperating with the bottom of the container (represented in Figure 1). The housing 3 and its port 36 cooperates with the container through a receiving area 5 configured for holding the bottom of the container. Accordingly the container 1 supplies the bulk material to the dosing unit 2 through the port 36 in the housing. As illustrated, the receiving area 5 can comprise slits or guiding tracks on its lateral walls designed for cooperating with corresponding pins or bumps of the container.

The dosing unit comprises a drawer 4 able to slide within the housing 3. In Figure 2a, the drawer is fully inside the housing that is in a metering position. In this position, bulk material is introduced from the container in the dosing unit and metered in a metering cavity of the drawer.

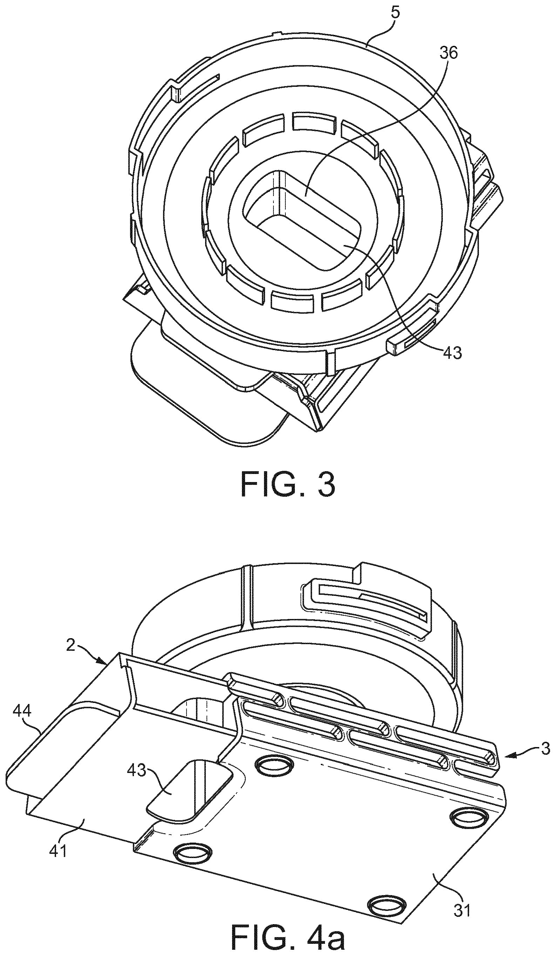

**Figure 3** is a top view of the dosing unit in the same metering position as Figure 2a and illustrating this metering cavity 43 positioned under the port 36 and able to be filled with bulk material.

**Figure 2b** is a view of the same dosing unit 2 wherein the drawer 4 has been partially pulled out of the housing 3 and is in the dispensing position. The drawer is pulled out so that the metered cavity 43 is positioned out of the housing and is able to dispense downwards the metered dose of bulk material.

**Figure 4a** is a bottom view of the dosing unit in the same dispensing position as Figure 2b showing the opened bottom of this metering cavity 43 able to dispense bulk material.

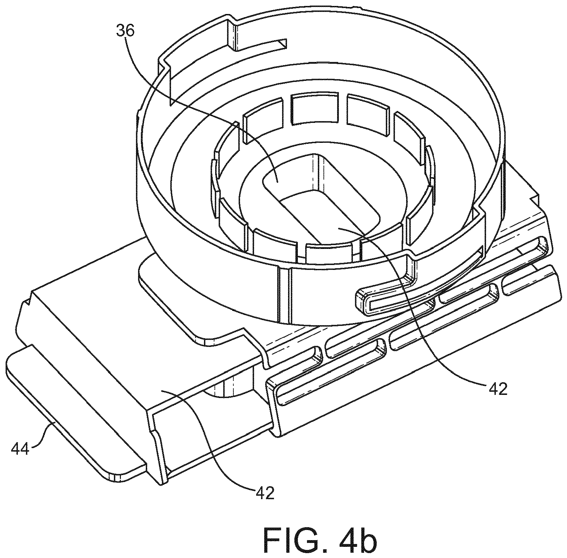

**Figure 4b** is a top view of the dosing unit in the same dispensing position illustrating how the port 36 is closed by the top wall 42 of the drawer.

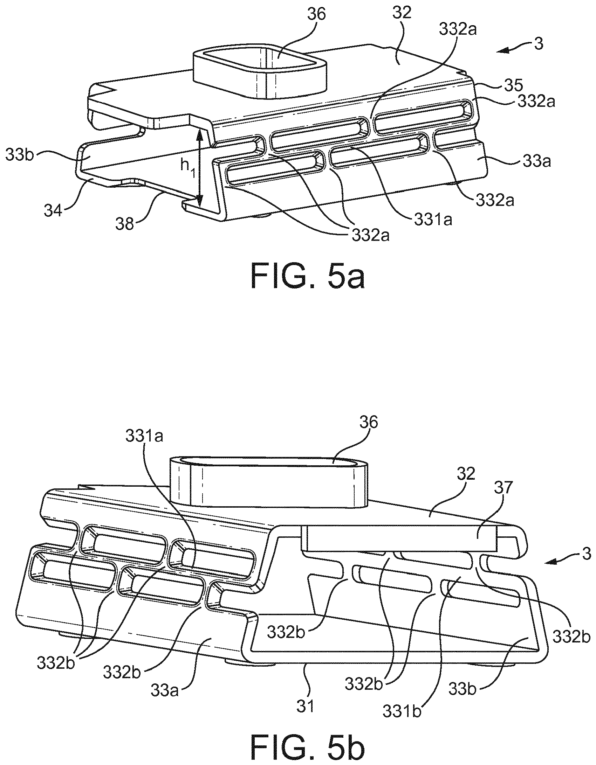

**Figures 5a and 5b** are perspective views of the housing 3 of the dosing unit of previous figures. In these figures, the receiving area 5 has been removed. The housing 3 comprises four walls : a bottom wall 31, a top wall 32, two lateral walls 33a, 33b. The top and the bottom walls 32, 31 are essentially parallel by design. Yet, when manufactured, in particular by injection moulding, the parallelism of these walls may not be perfect. In particular, the parallelism may exist globally, but locally, some areas of the top or the bottom wall may not be perfectly plane creating risk of local voids between the walls of the housing and the drawer. These voids may cooperate with one another and create paths for air, humidity and powder.

The housing 3 is opened at its front end 34 in order to enable the movement of the drawer in and out of the housing. Preferably, at the front end 34, the bottom wall 31 presents a sharp edge 38 in the area contacted by the metered cavity of the drawer. This sharp edge can scrap any bulk material that would remain attached to the edges of the cavity after dispensing of the dose of bulk material.

The housing 3 is opened at its rear end 35 but comprises a stopping member 37 in form of a wall extending from the rear end of the top wall. This member enables the positioning of the drawer in its metering position with the metered cavity right under the port 36 in the top wall. According to an alternative embodiment, the rear end can be a wall extending between the top and the bottom walls, yet this embodiment is less preferred, particularly because it is less convenient to clean such a housing.

The two lateral walls 33a, 33b of the housing are constricted vertically by construction. Due to this constriction, the lateral walls 33a, 33b of the housing are stretchable : they can expand and let the drawer slide in the housing although the drawer presents a larger height. Once the drawer is positioned in the housing, the lateral walls of the housing being expanded, these lateral walls exert opposed constriction forces on the drawer and clamp the drawer inside the housing. The result of this clamping is firstly tightness and limited contact of the metering cavity with atmosphere and secondly a restrained free movement of the drawer in the housing.

In the embodiment illustrated in Figures 5a, the constriction of the lateral walls 33a, 33b is due to the design of said walls : each wall comprises a rod 331a extending longitudinally along this lateral wall from the front end 34 to the rear end 35 of the housing. This longitudinal direction corresponds to the direction of the translation of the drawer in the housing. This rod is parallel to the longitudinal direction of the top wall and the bottom wall. This rod 331a is attached to the lateral wall 33a by upper and lower pillars 332a, in the illustrated embodiment six pillars. These pillars are alternatively positioned up and down along the length of the rod. As a result, the rod is attached to the lateral wall through three upper pillars and three lower pillars in an alternate disposition meaning that no upper pillar faces any lower pillar and vice-versa.

Such as illustrated in Figures 5a, 5b, the housing is in a non-expanded state since the drawer is not slid inside the housing. The internal height of the housing (that is the height between the lower surface of the top wall and the upper surface of the lower wall) is h₁. In the illustrated example, this height h₁ is of about 20 mm.

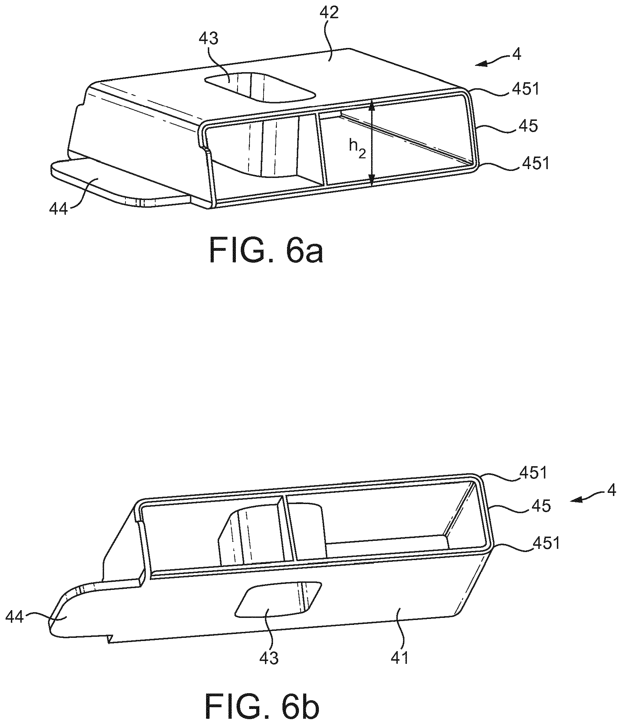

**Figures 6a and 6b** are perspective views of the drawer 4 of the dosing unit of previous figures. The drawer comprises a bottom wall 41 and a top wall 42. The top and the bottom walls 42, 41 are parallel by design. Yet, when manufactured, in particular by injection moulding, the parallelism of these walls may not be perfect. In particular, the parallelism may exist globally, but locally, some areas of the top or the bottom wall may not be perfectly plane creating risk of local voids between the walls of the housing and the drawer.

The drawer comprises the metering cavity 43 extending from the top wall to the bottom wall and designed to receive, dose and dispense bulk material.

The external height of the drawer (that is the distance between the upper surface of the top wall and the lower surface of the bottom wall) is h₂, h₂ being slightly larger than the internal height of the housing h₁ In the illustrated example, the difference between the heights h₁ and h₂ is of 0,1 mm.

When this drawer 4 slides in the housing 3 of Figures 5a, 5b, the small difference of heights (h₂ - h₁) and the vertical constriction of the lateral walls of the housing leads to the expansion of these lateral walls vertically due to the presence of the drawer in between. Then the constricted walls of the housing exert a constricting force on the drawer and clamp the top and bottom external surfaces of the drawer providing tightness between the top walls of the drawer and the housing and between the bottom walls of the drawer and the housing. The risk that air and/or humidity reach the bulk material in the cavity 43 is limited as well as the risk dust or powder escapes from the cavity in between the surfaces.

In addition, this constriction is designed to enable the retention of the drawer against gravity fall depending on the orientation of the dosing unit too.

In addition, even if, after manufacturing, the drawer and the housing do not exactly present the dimensions originally designed, in particular if the parallelism between the bottom and top walls of the housing and of the drawer is not perfect, the tightness between the drawer and the housing is guaranteed thanks to the constriction of the lateral walls of the housing. Actually, if the bottom and top walls 41, 42 of the drawer are not perfectly parallel and, as a result, if a part of the drawer is thicker than the rest of the drawer, then the housing thickness can increase more or less locally as the drawer slides within the housing. In the particular embodiment of the housing illustrated in Figures 5a, 5b, at least one of the rods 331a, 331b is able to be bent at least locally and to increase the thickness of the housing. For example, the rod(s) is/are able to bend out like a spring leaf to such a limit that they present a wave shape when a thick drawer is slid inside.

Depending on the nature of the material the housing is made of and depending on the dimensions of the housing, the shape and the thickness of the rods can be adapted to provide the required constriction.

Preferably the strength of the constriction of the housing is controlled so that it does not restrain the movement of the drawer in and out of the housing too strongly. On the contrary, preferably, the movement remains soft and easy.

A particular embodiment of the dosing unit illustrated in Figures 1 to 6b was produced in plastic with the following dimensions :
- an internal height h₁ of the housing of 20 mm, and
- an external height h₂ of the drawer of 20,1 mm, and
- rods 331a, 331b presenting a length of 85 mm and a transversal section surface of 5 mm².

Generally, the dimensions of elements of the lateral walls are adapted to the nature of the material the housing is made of.

An additional advantage of the constriction of the lateral walls of the housing in the doser is that this property enables the manufacture by injection moulding of a housing presenting essentially parallel top and bottom walls.

Indeed, it is currently known in the field of injection moulding that a single piece of material with essentially parallel walls such as the housing cannot be produced because such a piece of material can hardly be unmoulded without breaking a part of the piece. Actually, the manufacturing of the housing requires a mould made of two parts : a first one for designing the external part of the housing and a second one for designing the internal part of the housing. During injection, the second part is positioned inside the first part and plastic is injected in the gap in between the internal and external parts. Once plastic has become rigid, the two parts of the mould are separated therefrom. If the housing is designed with essentially parallel top and bottom walls, the removal of the second part of mould positioned inside the injected moulded housing is extremely difficult and usually leads to the break of the moulded housing.

For this reason, it is currently known to design the so-called parallel walls with a slightly tapering angle. As a result, this tapering angle enables an easy removal of the injected piece of material from the mould, yet, the resulting piece of material cannot present essentially parallel walls. This is a critical problem in the concept of the dosing unit of the present invention since this parallelism is essential to get tightness between the drawer and the housing.

Yet with the housing presenting constricted walls, a housing with essentially parallel top and bottom walls can be designed and manufactured by injection moulding without any issue related to the unmoulding of the housing from the mould. Indeed the constriction property pf the lateral walls of the housing provides a spring effect and a flexibility avoiding the break of the housing during unmoulding.

As illustrated in Figures 6a and 6b, preferably, the rear end of the drawer 45 presents rounded corners 451. Consequently, the far rear end of the drawer presents a reduced height, usually slightly smaller than the internal height of the housing and the drawer can be easily introduced in the housing although the lateral walls 33a, 33b of the housing are not yet expanded.

The drawer usually comprises a pulling member 44, like a tongue, to be able to pull the drawer either manually or in a motorized way.

As illustrated in Figures 6a and 6b, preferably, the metered cavity is positioned in the drawer so that in the top wall, respectively in the bottom wall, the lateral edges of the cavity are distant from the lateral edges of the top wall, respectively of the bottom wall.

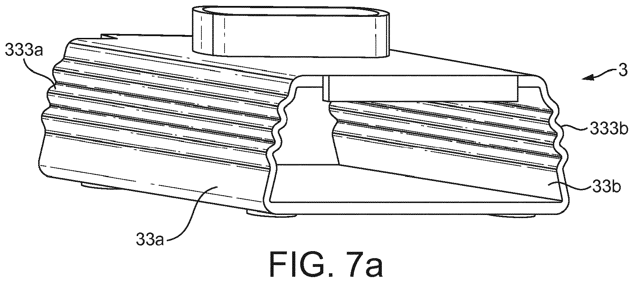

**Figure 7a** illustrates the second embodiment of the housing alternative to the housing of Figures 1 to 5b. Each lateral walls 33a, 33b of this housing comprises a bellows-like portion 333a, 333b. The bellows are constructed so as to provide a vertical constriction of the lateral walls of the housing.

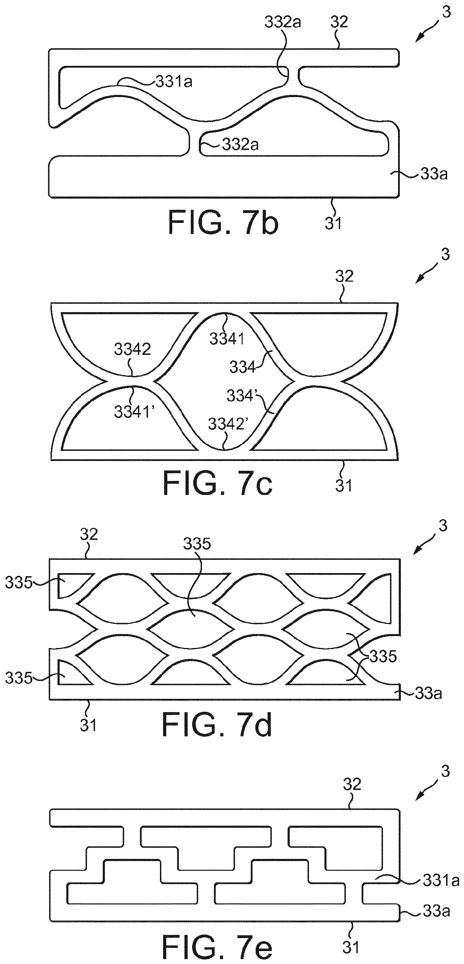

Figures 7b to 7e illustrate various housing embodiments alternative to the housing of Figures 1 to 5b.

The different embodiments differentiates by the design of the lateral wall 33a. The other lateral wall 33b is not illustrated but present the same design as the illustrated wall 33a. The different designs provide a constriction effect to both lateral walls.

In **Figure 7b****,** the design of the lateral wall 33a is similar to the lateral wall illustrated in Figures 1 to 5b except that the rod 3 is not straight and is replaced by a wave line 331a.

In **Figure 7c****,** the lateral wall 33a comprises two wave lines 334, 334', one attached to the top edge of the lateral wall and the other to the bottom edge of the lateral wall, each of the waves extending from the front end to the rear end of the housing. The two waves present similar design and join at their crusts 3341' and troughs 3342 respectively.

In **Figure 7d****,** the lateral wall 33a comprises several wave lines 334, 334', (in the illustrated example four wave lines) each of the waves extending from the front end to the rear end of the housing, each wave being out of line compared to the next close wave line(s) so that crusts and troughs of the waves join. As a result the design of the wall comprises a mesh of cavities 335.

In **Figure 7e****,** the design of the lateral wall 33a is similar to the lateral wall illustrated in Figures 1 to 5b except that the rod is not straight but is replaced by a crenellated line 331a.

In all these figures, each lateral wall of the housing comprises a mesh of cavities 335. The mesh comprises at least two lines of cavities aligned longitudinally along the lateral wall, and for two side touching lines, the cavities of one line are out of line with the cavities of the other line. These configurations provide expandable lateral walls able to clamp the drawer inside the housing.

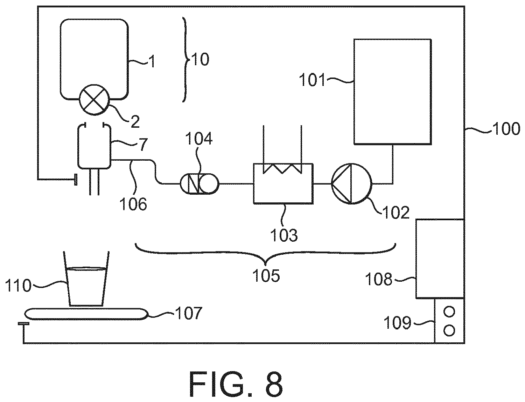

**Figure 8** illustrates a beverage production apparatus 100. The apparatus includes a beverage preparation chamber 7. The chamber is configured for producing a beverage from a beverage ingredient and an aqueous liquid, preferably water, entering the chamber.

The beverage ingredient is stored in the container 1 of a device for storing, metering and dispensing ingredient such as described above. The container 1 can be a hopper which is permanent or a disposable package containing the beverage ingredient.

A dose of beverage ingredient is metered and dispensed by the dosing unit 2 of the device. The dosing unit dispenses the dose of beverage ingredient in the chamber 7, generally by gravity fall in a top opening of the chamber.

Preferably the ingredient is a soluble ingredient typically a dry beverage powder, such as instant soluble coffee. In that case, the chamber 7 is a mixing chamber enabling the dissolution of the ingredient in an aqueous liquid.

Alternatively, the ingredient can be roast and ground coffee powder. In that case, the chamber 7 is a brewing chamber enabling the extraction of the coffee with water.

The dosing unit 2 can be actuated manually. Alternatively the dosing unit, more particularly the drawer of the dosing unit, can be actuated by a motor an automatically actuated as prompted by a controller 108 and command 109.

A liquid, preferably water, supplying system is provided in the machine to be able to feed water in the chamber 7, more particularly, hot water.

In the illustrated embodiment, the water supplying system 105 comprises :
- a tank 101 that can be replenished with fresh water, or eventually connected to tap water,
- a water pump 102 for pumping water from the tank 101. The pump can be any type of pump such as a piston pump, diaphragm pump or a peristaltic pump.
- a water heater 103 such as a thermoblock or a cartridge type heater to heat the pumped water, alternatively or in addition to, the machine can comprise a water cooler in a line bypassing the heater,
- a non-return valve 104.

Finally water is fed into the chamber 7 by a tube 106.

As illustrated, the chamber 7 can be placed directly above a service tray 107 onto which is placed a drinking cup 110 to receive the beverage liquid.

The controller 108 can coordinate dosing of the beverage ingredient by the dosing unit 2 and liquid by the pump 102 upon the user actuating or being prompted to press the command 109 on the apparatus.

Generally, the dosing of the beverage ingredient happens before the liquid is introduced in the chamber. It is preferred that, at the end of the dosing, the drawer is positioned in the metering position again that is away from the top opening of the chamber. Consequently, there is no risk that water drops or humidity reaches this cavity during beverage preparation.

The above beverage production apparatus using the device for storing, metering and dispensing bulk material as illustrated in Figure 1 was tested in a climatic room at a temperature of 30°C and at the relative humidity of 70% representing tropical conditions. The container was filled with agglomerated soluble coffee (NESCAFE Red Cup ®). The test lasted four weeks and two coffee beverage were extracted each day. The coffee beverage was prepared from 2 g agglomerated soluble coffee and 140 ml of hot water.

After four weeks :
- no blockage of the dosing unit was noticed,
- the dosing accuracy of the powder was not affected, and
- the taste of the beverage showed close profile to the beverage reference without any off notes.

The dosing accuracy was measured by weighing the prepared coffee and measuring the Brix of the sample. Then, by reference to a calibration curve, the dry matter of the beverage was calculated for each prepared beverage.

This test confirms the tightness provided by the dosing unit. Due to this tightness, even if the machine is not frequently used (twice a day) and a dose of coffee remains stored in the metered cavity between two beverage preparations, the quality of the beverages remain good.

Due to this clamping, the bottom wall of the drawer, respectively the top wall of the drawer, tightly fits and slides along the bottom wall of the housing, respectively along the top wall of the housing, improving the tightness between the two elements. Due to this tightness, when the dosing unit is not used and is positioned in the metering position, with bulk material present in the metering cavity, air and moisture can hardly reach said cavity and bulk material. Consequently, the properties of the bulk material are not affected and the quality of the beverage prepared therefrom is good.

The device of the invention presents the advantage of providing the ability to replace the drawer of the dosing unit by another drawer presenting another metered cavity or for replacement further to maintenance. Even if the drawer is not perfectly designed for tightly fitting in the housing, the housing can compensate the imperfect design and guarantee tightness.

Although the invention has been described with reference to the above illustrated embodiments, it will be appreciated that the invention as claimed is not limited in any way by these illustrated embodiments.

Variations and modifications may be made without departing from the scope of the invention as defined in the claims. Furthermore, where known equivalents exist to specific features, such equivalents are incorporated as if specifically referred in this specification.

As used in this specification, the words "comprises", "comprising", and similar words, are not to be interpreted in an exclusive or exhaustive sense. In other words, they are intended to mean "including, but not limited to".

**List of references in the drawings :**

| | |
|---|---|
| container | 1 |
| dosing unit | 2 |
| housing | 3 |
| bottom wall | 31 |
| top wall | 32 |
| lateral walls | 33a, 33b |
| rods | 331a, 331b |
| pillars | 332a, 332b |
| bellows-like portion | 333a, 333b |
| wave line | 334, 334' |
| top | 3341 |
| trough | 3342 |
| front end | 34 |
| rear end | 35 |
| port | 36 |
| stopping member | 37 |
| sharp edge | 38 |
| drawer | 4 |
| bottom wall | 41 |
| top wall | 42 |
| metering cavity | 43 |
| pulling member | 44 |
| rear end | 45 |
| rounded corner | 451 |
| receiving area | 5 |
| motor | 6 |
| beverage preparation chamber | 7 |
| device for storing, metering, dispensing | 10 |
| beverage preparation apparatus | 100 |
| tank | 101 |
| pump | 102 |
| heater | 103 |
| valve | 104 |
| water supplying system | 105 |
| pipe | 106 |
| service tray | 107 |
| controller | 108 |
| command | 109 |
| drinking cup | 110 |

## Claims

1. Device (10) for storing, metering and dispensing bulk material, said device comprising :
- a container (1) for storing the bulk material, and
- a dosing unit (2) for metering and dispensing a metered dose of bulk material from the container,
the bottom of the container cooperating with the dosing unit in order to supply bulk material to the dosing unit, and
the dosing unit (2) comprising :
- a housing (3) comprising a bottom wall (31), a top wall (32), two lateral walls (33a, 33b), a front end (34) and a rear end (35), the top wall comprising a port (36) cooperating with the bottom of the container,
- a drawer (4) able to slide longitudinally in and out of said housing (3) through the front end (34) of the housing between a metering position and a dispensing position respectively, said drawer comprising :
▪ a bottom wall (41) and a top wall (42), and
▪ a metering cavity (43) extending from the top wall to the bottom wall and designed to receive bulk material from the port (36) of the housing when the drawer is in the metering position and to discharge the metered quantity of bulk material when the drawer is in the dispensing position,
**characterised in that**:
- the lateral walls (33a, 33b) of the housing are constricted vertically by construction, and said lateral walls (33a, 33b) of the housing are able to expand vertically in response to the longitudinal sliding movement of the drawer inside the housing, and
- the external height (h₂) of the drawer is larger than the internal height (h₁) of the housing when said housing is in a non-expanded state, and
- the constriction of the lateral walls (33a, 33b) of the housing is adapted to bring the drawer (4) into clamping engagement with the top and bottom walls (31, 32) of the housing when the drawer is positioned in the housing.

2. Device according to any one of the precedent claims, wherein the external height of the drawer is larger than the internal height of the housing by at least 0,1 mm.

3. Device according to Claim 1 or 2, wherein the housing (3) is made of one single piece of material.

4. Device according to any one of the precedent claims, wherein the design of the lateral walls (33a, 33b) of the housing provides constriction of the lateral walls of the housing (3).

5. Device according to any one of the precedent claims, wherein the housing (3) is made of plastic and the plastic is selected in the list of linear polyethylene (PE), polyethylene terephthalate (PET), polytetrafluoroethylene (PTFE), isotactic polypropylene (PP), polyphenyl ethers (PPEs) or polyphenylene oxides (PPOs).

6. Device according to the precedent claim, wherein the housing (3) is made by injection moulding.

7. Device according to any one of the precedent claims, wherein :
- each lateral wall (33a, 33b) of the housing comprises a mesh of cavities (335), and
- said mesh comprises at least two lines of cavities aligned longitudinally along the lateral wall, and
- for two side touching lines, the cavities of one line are out of line with the cavities of the other line.

8. Device according to the precedent claim, wherein the walls of the cavities present the shape of waves extending longitudinally along the lateral wall, two side touching waves joining at their crusts and troughs.

9. Device according to any one of Claims 1 to 7, wherein each lateral wall (33a, 33b) of the housing comprises a rod (331a, 331b),
said rod extending longitudinally along the lateral wall from the front end (34) to the rear end (35) of the housing, and
said rod being attached to the lateral wall by upper and lower pillars (332a, 332b), and
said upper and lower pillars being alternatively positioned along the length of the rod.

10. Device according to any one of Claims 1 to 6, wherein each lateral wall (33a, 33b) of the housing is designed at least regionally in a bellows-like configuration, the bellows being constructed so as to provide a vertical constriction of the lateral walls of the housing.

11. Device according to any one of the preceding claims wherein the metering cavity (43) of the drawer is positioned in the drawer so that in the top and in the bottom walls the lateral edges of the metering cavity are distant from the lateral edges of said wall.

12. Device according to any one of the preceding claims, wherein the container (1) is removable from the device and the dosing unit (2) comprises a receiving area (5) for connecting the container to the port of the top wall of the housing.

13. A beverage preparation system comprising a device (10) for storing, metering and dispensing beverage ingredient in bulk according to any one of Claims 1 to 12

14. A beverage preparation system according to the preceding claim, wherein said system comprises a beverage preparation chamber (7) connected to at least one liquid supply, and wherein the device for storing, metering and dispensing beverage ingredient in bulk cooperates with said beverage preparation chamber so that beverage ingredient is dispensed in the chamber.

15. Method for producing a beverage in a beverage preparation system according to Claim 14 comprising the steps of :
- positioning the drawer (4) in the metering position, then
- positioning the drawer (4) in the dispensing position, and then
- introducing liquid in the beverage preparation chamber (7).

16. Method according to the precedent claim, wherein, after positioning the drawer in the dispensing position and before introducing liquid in the beverage preparation chamber, the drawer is positioned in the metering position again.

## Patentansprüche

1. Vorrichtung (10) zum Aufbewahren, Messen und Ausgeben von Schüttgut, wobei die Vorrichtung umfasst:
- einen Behälter (1) zum Aufbewahren des Schüttguts, und
- eine Messeinheit (2) zum Messen und Ausgeben einer gemessenen Menge Schüttgut aus dem Behälter,
wobei der Boden des Behälters mit der Messeinheit zusammenwirkt, um der Messeinheit Schüttgut zuzuführen, und
wobei die Messeinheit (2) umfasst:
- ein Gehäuse (3), das eine untere Wand (31), eine obere Wand (32), zwei Seitenwände (33a, 33b), ein vorderes Ende (34) und ein hinteres Ende (35) umfasst, wobei die obere Wand eine Öffnung (36) umfasst, die mit dem Boden des Behälters zusammenwirkt,
- eine Schublade (4), die in Längsrichtung in das Gehäuse (3) hinein und aus diesem heraus durch das vordere Ende (34) des Gehäuses zwischen einer Messposition bzw. einer Ausgabeposition gleiten kann, wobei die Schublade umfasst:
▪ eine untere Wand (41) und eine obere Wand (42), und
▪ einen Messhohlraum (43), der sich von der oberen Wand zur unteren Wand erstreckt und ausgelegt ist, um Schüttgut von der Öffnung (36) des Gehäuses aufzunehmen, wenn sich die Schublade in der Messposition befindet, und die gemessene Menge Schüttgut auszugeben, wenn sich die Schublade in der Ausgabeposition befindet,
**dadurch gekennzeichnet, dass:**
- die Seitenwände (33a, 33b) des Gehäuses konstruktionsbedingt vertikal verengt sind und die Seitenwände (33a, 33b) des Gehäuses in der Lage sind, sich als Reaktion auf die Längsgleitbewegung der Schublade innerhalb des Gehäuses vertikal auszudehnen, und
- die Außenhöhe (h₂) der Schublade größer als die Innenhöhe (h₁) des Gehäuses ist, wenn sich das Gehäuse in einem nicht ausgedehnten Zustand befindet, und
- die Verengung der Seitenwände (33a, 33b) des Gehäuses ausgelegt ist, um die Schublade (4) in Klemmeingriff mit der oberen und der unteren Wand (31, 32) des Gehäuses zu bringen, wenn die Schublade im Gehäuse positioniert ist.

2. Vorrichtung nach einem der vorstehenden Ansprüche, wobei die Außenhöhe der Schublade um mindestens 0,1 mm größer als die Innenhöhe des Gehäuses ist.

3. Vorrichtung nach Anspruch 1 oder 2, wobei das Gehäuse (3) aus einem einzigen Materialstück hergestellt ist.

4. Vorrichtung nach einem der vorstehenden Ansprüche, wobei die Gestaltung der Seitenwände (33a, 33b) des Gehäuses eine Verengung der Seitenwände des Gehäuses (3) bereitstellt.

5. Vorrichtung nach einem der vorstehenden Ansprüche, wobei das Gehäuse (3) aus Kunststoff besteht und der Kunststoff aus der Liste aus linearem Polyethylen (PE), Polyethylenterephthalat (PET), Polytetrafluorethylen (PTFE), isotaktischem Polypropylen (PP), Polyphenylether (PPE) oder Polyphenylenoxiden (PPO) ausgewählt ist.

6. Vorrichtung nach dem vorstehenden Anspruch, wobei das Gehäuse (3) durch Spritzgießen hergestellt ist.

7. Vorrichtung nach einem der vorstehenden Ansprüche, wobei:
- jede Seitenwand (33a, 33b) des Gehäuses ein Netz von Hohlräumen (335) umfasst, und
- das Netz mindestens zwei Reihen von Hohlräumen umfasst, die in Längsrichtung entlang der Seitenwand ausgerichtet sind, und
- bei zwei sich seitlich berührenden Reihen die Hohlräume einer Reihe versetzt zu den Hohlräumen der anderen Reihe sind.

8. Vorrichtung nach dem vorstehenden Anspruch, wobei die Wände der Hohlräume die Form von Wellen aufweisen, die sich in Längsrichtung entlang der Seitenwand erstrecken, wobei zwei sich seitlich berührende Wellen an ihren Kämmen und Tälern zusammentreffen.

9. Vorrichtung nach einem der Ansprüche 1 bis 7, wobei jede Seitenwand (33a, 33b) des Gehäuses einen Stab (331a, 331b) umfasst,
wobei sich der Stab in Längsrichtung entlang der Seitenwand vom vorderen Ende (34) zum hinteren Ende (35) des Gehäuses erstreckt, und
wobei der Stab durch obere und untere Säulen (332a, 332b) an der Seitenwand befestigt ist, und
wobei die oberen und unteren Säulen abwechselnd entlang der Länge des Stabs angeordnet sind.

10. Vorrichtung nach einem der Ansprüche 1 bis 6, wobei jede Seitenwand (33a, 33b) des Gehäuses mindestens bereichsweise balgartig ausgebildet ist, wobei der Balg so ausgebildet ist, dass eine vertikale Verengung der Seitenwände des Gehäuses gegeben ist.

11. Vorrichtung nach einem der vorstehenden Ansprüche, wobei der Messhohlraum (43) der Schublade so in der Schublade positioniert ist, dass in der oberen und in der unteren Wand die seitlichen Ränder des Messhohlraums in Abständen zu den seitlichen Rändern der Wand angeordnet sind.

12. Vorrichtung nach einem der vorstehenden Ansprüche, wobei der Behälter (1) von der Vorrichtung abnehmbar ist und die Messeinheit (2) einen Aufnahmebereich (5) zum Verbinden des Behälters mit der Öffnung der oberen Wand des Gehäuses umfasst.

13. Getränkezubereitungssystem, umfassend eine Vorrichtung (10) zum Aufbewahren, Messen und Ausgeben von Getränkeinhaltsstoff als Schüttgut nach einem der Ansprüche 1 bis 12.

14. Getränkezubereitungssystem nach dem vorstehenden Anspruch, wobei das System eine Getränkezubereitungskammer (7) umfasst, die mit mindestens einer Flüssigkeitsversorgung verbunden ist, und wobei die Vorrichtung zum Aufbewahren, Messen und Ausgeben von Getränkeinhaltsstoff als Schüttgut mit der Getränkezubereitungskammer zusammenwirkt, sodass Getränkeinhaltsstoff in die Kammer ausgegeben wird.

15. Verfahren zum Zubereiten eines Getränks in einem Getränkezubereitungssystem nach Anspruch 14, umfassend die Schritte:
- Positionieren der Schublade (4) in der Messposition, dann
- Positionieren der Schublade (4) in der Ausgabeposition und dann
- Einleiten von Flüssigkeit in die Getränkezubereitungskammer (7).

16. Verfahren nach dem vorstehenden Anspruch, wobei nach dem Positionieren der Schublade in der Ausgabeposition und vor dem Einleiten von Flüssigkeit in die Getränkezubereitungskammer die Schublade erneut in der Messposition positioniert wird.

## Revendications

1. Dispositif (10) pour stocker, mesurer et distribuer un matériau en vrac, ledit dispositif comprenant :
- un contenant (1) pour stocker le matériau en vrac, et
- une unité de dosage (2) pour mesurer et distribuer une dose mesurée de matériau en vrac à partir du contenant,
le fond du contenant coopérant avec l'unité de dosage afin d'alimenter un matériau en vrac vers l'unité de dosage, et
l'unité de dosage (2) comprenant :
- un logement (3) comprenant une paroi inférieure (31), une paroi supérieure (32), deux parois latérales (33a, 33b), une extrémité avant (34) et une extrémité arrière (35), la paroi supérieure comprenant un orifice (36) coopérant avec le fond du contenant,
- un tiroir (4) apte à coulisser longitudinalement à l'intérieur et à l'extérieur dudit logement (3) à travers l'extrémité avant (34) du logement entre une position de mesurage et une position de distribution respectivement, ledit tiroir comprenant :
▪ une paroi inférieure (41) et une paroi supérieure (42), et
▪ une cavité de mesurage (43) s'étendant de la paroi supérieure à la paroi inférieure et conçue pour recevoir un matériau en vrac à partir de l'orifice (36) du logement lorsque le tiroir est dans la position de mesurage et pour décharger la quantité mesurée de matériau en vrac lorsque le tiroir est dans la position de distribution,
**caractérisé en ce que** :
- les parois latérales (33a, 33b) du logement sont resserrées verticalement par construction, et lesdites parois latérales (33a, 33b) du logement sont aptes à s'expanser verticalement en réponse au mouvement coulissant du tiroir à l'intérieur du logement, et
- la hauteur externe (h₂) du tiroir est plus grande que la hauteur interne (h₁) du logement lorsque ledit logement est dans un état non expansé, et
- le resserrement des parois latérales (33a, 33b) du logement est conçu pour amener le tiroir (4) en mise en prise de serrage avec les parois supérieure et inférieure (31, 32) du logement lorsque le tiroir est positionné dans le logement.

2. Dispositif selon l'une quelconque des revendications précédentes, dans lequel la hauteur externe du tiroir est plus grande que la hauteur interne du logement d'au moins 0,1 mm.

3. Dispositif selon la revendication 1 ou 2, dans lequel le logement (3) est constitué d'une pièce unique de matériau.

4. Dispositif selon l'une quelconque des revendications précédentes, dans lequel la conception des parois latérales (33a, 33b) du logement fournit un resserrement des parois latérales du logement (3).

5. Dispositif selon l'une quelconque des revendications précédentes, dans lequel le logement (3) est constitué de plastique et le plastique est choisi dans la liste de polyéthylène linéaire (PE), téréphtalate de polyéthylène (PET), polytétrafluoréthylène (PTFE), polypropylène isotactique (PP), éthers de polyphényle (PPE) ou oxydes de polyphénylène (PPO).

6. Dispositif selon la revendication précédente, dans lequel le logement (3) est fabriqué par moulage par injection.

7. Dispositif selon l'une quelconque des revendications précédentes, dans lequel :
- chaque paroi latérale (33a, 33b) du logement comprend un maillage de cavités (335), et
- ledit maillage comprend au moins deux lignes de cavités alignées longitudinalement le long de la paroi latérale, et
- pour deux lignes de contact latéral, les cavités d'une ligne ne concordent pas avec les cavités de l'autre ligne.

8. Dispositif selon la revendication précédente, dans lequel les parois des cavités présentent la forme d'ondulations s'étendant longitudinalement le long de la paroi latérale, deux ondulations de contact latéral se rejoignant au niveau de leurs crêtes et creux.

9. Dispositif selon l'une quelconque des revendications 1 à 7, dans lequel chaque paroi latérale (33a, 33b) du logement comprend une tige (331a, 331b),
ladite tige s'étendant longitudinalement le long de la paroi latérale depuis l'extrémité avant (34) jusqu'à l'extrémité arrière (35) du logement, et
ladite tige étant fixée à la paroi latérale par des piliers supérieurs et inférieurs (332a, 332b), et
lesdits piliers supérieurs et inférieurs étant positionnés en alternance sur la longueur de la tige.

10. Dispositif selon l'une quelconque des revendications 1 à 6, dans lequel chaque paroi latérale (33a, 33b) du logement est conçue au moins par endroits dans une configuration de type soufflet, le soufflet étant construit de façon à fournir un resserrement vertical des parois latérales du logement.

11. Dispositif selon l'une quelconque des revendications précédentes dans lequel la cavité de mesurage (43) du tiroir est positionnée dans le tiroir de sorte que dans les parois supérieure et inférieure les bords latéraux de la cavité de mesurage sont distants des bords latéraux de ladite paroi.

12. Dispositif selon l'une quelconque des revendications précédentes, dans lequel le contenant (1) peut être retiré du dispositif et l'unité de dosage (2) comprend une zone de réception (5) pour relier le contenant à l'orifice de la paroi supérieure du logement.

13. Système de préparation de boisson comprenant un dispositif (10) pour stocker, mesurer et distribuer un ingrédient de boisson en vrac selon l'une quelconque des revendications 1 à 12

14. Système de préparation de boisson selon la revendication précédente, dans lequel ledit système comprend une chambre de préparation de boisson (7) reliée à au moins une alimentation en liquide, et dans lequel le dispositif pour stocker, mesurer et distribuer un ingrédient de boisson en vrac coopère avec ladite chambre de préparation de boisson de sorte qu'un ingrédient de boisson est distribué dans la chambre.

15. Procédé de production d'une boisson dans un système de préparation de boisson selon la revendication 14 comprenant les étapes consistant à :
- positionner le tiroir (4) dans la position de mesurage, ensuite
- positionner le tiroir (4) dans la position de distribution, puis
- introduire un liquide dans la chambre de préparation de boisson (7).

16. Procédé selon la revendication précédente, dans lequel, après positionnement du tiroir dans la position de distribution et avant introduction de liquide dans la chambre de préparation de boisson, le tiroir est positionné de nouveau dans la position de mesurage.
